# EUROPEAN PATENT SPECIFICATION

(11) **EP 4 109 587 B1**
(45) Date of publication and mention of the grant of the patent: **22.04.2026**
(21) Application number: 21892262.3
(22) Date of filing: 08.11.2021
(51) Int. Cl.: H01M 4/131, H01M 4/136, H01M 4/36, H01M 4/505, H01M 4/525, H01M 4/62, H01M 10/052, H01M 4/02

(54) **POSITIVE ELECTRODE FOR LITHIUM SECONDARY BATTERY, AND LITHIUM SECONDARY BATTERY**
POSITIVELEKTRODE FÜR LITHIUMSEKUNDÄRBATTERIE UND LITHIUMSEKUNDÄRBATTERIE
ÉLECTRODE POSITIVE POUR BATTERIE SECONDAIRE AU LITHIUM ET BATTERIE SECONDAIRE AU LITHIUM

(30) Priority: 16.11.2020 KR 20200153024
(43) Date of publication of application: 28.12.2022
(60) Divisional application: 26151712.2
(73) Proprietor: LG Energy Solution, Ltd., Seoul 07335 (KR)
(72) Inventor: LEE, Kyung Min, Daejeon 34122 (KR); JUNG, Bum Young, Daejeon 34122 (KR)
(74) Representative: Plasseraud IP
(86) International application number: PCT/KR2021/016109
(87) International publication number: WO 2022/103094

(56) References cited:
- JP-A- 2013 211 096
- KR-A- 20140 017 470
- KR-A- 20140 137 660
- KR-A- 20180 058 197
- US-A1- 2006 019 151
- US-A1- 2013 216 914
- US-A1- 2018 212 249
- US-A1- 2020 144 600
- US-A1- 2020 161 638

## Description

### [Technical Field]

This application claims the benefit of priority based on Korean Patent Application No. 10-2020-0153024, filed on November 16, 2020.

The present invention relates to a positive electrode for a lithium secondary battery, and more particularly, to a positive electrode for a lithium secondary battery having an improved safety, and a lithium secondary battery.

### [Background Art]

As technology development and demand for mobile devices increase, the demand for secondary batteries as energy sources is rapidly increasing. Among such secondary batteries, lithium secondary batteries having a high energy density and operating potential, a long cycle life and a low self-discharge rate are commercialized and widely used.

Recently, as a lithium secondary battery is used as a power source of a medium or large size device such as an electric vehicle, a high capacity, a high energy density and low costs for lithium secondary batteries are required. As such, studies have been actively conducted to use low-cost Ni, Mn, Fe, etc. which may substitute expensive Co.

One of man research tasks about the lithium secondary battery is in implementing a high capacity and a high output electrode active material and improving safety of the battery using the same. Lithium transition metal complex oxide is used as the positive electrode active material, and among them, a lithium cobalt complex metal oxide having excellent capacity characteristics and a high operating voltage is mainly used. Further, since LiCoO₂ has very poor thermal characteristics due to unstable crystal structure according to delithiation and is expensive, it is difficult for a large amount of LiCoO₂ to be used as the power source for electric vehicles, etc.

Lithium manganese complex metal oxide (LiMnO₂ or LiMn₂O₄, etc.), lithium iron phosphate compound (LiFePO₄, etc.), or lithium nickel complex metal oxide (LiNiO₂, etc.) has been developed. Among them, lithium nickel complex metal oxide, which can be easily implemented as a large capacity battery by having a large reversible capacity of about 200 mAh/g, is currently actively researched and developed. However, compared to LiCoO₂, thermal stability of LiNiO₂ is not good, and when an internal short circuit occurs by pressure from an external side in a charged state, the positive electrode active material itself is decomposed, thereby causing rupture and ignition of the battery.

As such, a method of substituting part of nickel (Ni) with cobalt (Co) or manganese (Mn) was suggested as a method for improving a low thermal stability while maintaining an excellent reversible capacity of LiNiO₂. However, in the case of LiNi_{1-α}Co_{α}O₂ (α=0.1~0.3), which is obtained by substituting part of nickel with cobalt, charge and discharge characteristics and lifespan characteristics are excellent, but thermal stability is low. Further, in the case of nickel-manganese-based lithium composite metal oxide, which is obtained by substituting part of Ni with Mn having excellent thermal stability, and nickel-cobalt-manganese-based lithium composite metal oxide (hereinafter, referred to "NCM-based lithium oxide"), which is obtained by substituting part of Ni with Mn and Co, cycle characteristics and thermal stability are relatively excellent, but since the penetration resistance is low, an internal short circuit does not occur when a metal body such as a nail penetrates, and accordingly ignition or explosion may occur due to overcurrent.

Korean Patent Publication No. 2019-0047203 discloses a technology for securing safety of a battery by blocking a charging current by increasing the resistance at the time of an overcharge by interposing an overcharge preventing layer between a positive electrode current collector and a positive electrode active material layer. However, in the above prior art literature, the overcharge preventing layer has a low penetration resistance. As such, when penetrated by a needle body, there may be a problem from the perspective of safety. Other documents such as US2020161638A1, JP 2013 211096 A, KR 10-2018-0058197 A, KR 10-2014-0017470 A, KR 10-2014-0137660 A, US2018/212249 A1 and US2020/144600 A1 also disclose positive electrodes comprising more than one layer of positive electrode active material.

Hence, there is still a need for a technology about a positive electrode for a secondary battery which has increased penetration resistance in the case that a metal body such as a nail from an external side penetrates an electrode.

### [Disclosure]

### [Technical Problem]

An object of the present invention is to provide a positive electrode for a secondary battery capable of increasing the penetration resistance in the case that a metal body such as a nail from an external side penetrates an electrode while having high capacity and high output performance, excellent cycle characteristics, and thermal stability, and a lithium secondary battery including the positive electrode.

### [Technical Solution]

A positive electrode for a lithium secondary battery according to the present invention is defined in the claims and includes: a first positive electrode mixture layer contacting a positive electrode current collector; and at least one second positive electrode mixture layer arranged on the first positive electrode mixture layer, wherein the first positive electrode mixture layer includes a first positive electrode active material and a first binder, wherein the second positive electrode mixture layer includes a second positive electrode active material and a second binder, and wherein an average particle diameter (D₅₀) the first positive electrode active material is smaller than an average particle diameter (D₅₀) of the second positive electrode active material and is equal to or less than 3µm, and a specific surface area(BET) of the first positive electrode active material is equal to or greater than 3m²/g.

In an embodiment of the present invention, the average particle diameter (D₅₀) the first positive electrode active material may be in a range of 0.1µm to 2µm, and the specific surface area of the first positive electrode active material may be in a range of 5 m²/g to 25 m²/g.

In an embodiment of the present invention, an adhesive force (a) between the positive electrode current collector and the first positive electrode mixture layer is greater than an adhesive force (b) between the first positive electrode mixture layer and the second positive electrode mixture layer.

In an embodiment of the present invention, an adhesive force (a) between the positive electrode current collector and the first positive electrode mixture layer is in a range of 100N/m to 500N/m.

In an embodiment of the present invention, an adhesive force (b) between the first positive electrode mixture layer and the second positive electrode mixture layer is in a range of 10N/m to 40N/m.

In an embodiment of the present invention, the first binder and the second binder are binders having a same physical property.

In an embodiment of the present invention, a weight ratio of the first binder based on a total weight of the first positive electrode mixture layer is greater than a weight ratio of the second binder based on a total weight of the second positive electrode mixture layer.

In an embodiment of the present invention, the weight ratio of the first binder of the total weight of the first positive electrode mixture layer is in a range of 0.01 to 0.3.

In the present invention, an elongation rate of the positive electrode for the lithium secondary battery is in a range of 0.5% to 2.0%.

In an embodiment of the present invention, A/B ≤ 0.3. Herein, A denotes a thickness of the first positive electrode mixture layer, and B denotes a thickness of the second positive electrode mixture layer.

In an embodiment of the present invention, a thickness of the first positive electrode mixture layer is in a range of 1µm to 20µm.

In an embodiment of the present invention, at least one of the first positive electrode active material and the second positive electrode active material includes a lithium transition metal oxide represented by a following chemical formula 1:

[Chemical formula 1] LiₐNi_{1-x-y}COₓMn_{y}MzO₂

Herein, M is at least one selected from the group consisting of Al, Zr, Ti, Mg, Ta, Nb, Mo and Cr, and wherein 0.9≤a≤1.5, 0≤x≤1, 0≤y≤0.5, 0≤z≤0.1, and 0≤x+y≤1.

In the present invention, the first positive electrode active material contains lithium iron phosphate having an olivine structure, represented by a following chemical formula 2:

[Chemical formula 2] Li₁₊ₐFe₁₋ₓMₓ(PO_{4-b})X_{b}

Herein, M is at least one selected from the group consisting of Al, Mg and Ti, X is at least one selected from the group consisting of F, S and N, -0.5≤a≤+0.5, 0≤x≤0.5, and 0≤b≤0.1.

In an embodiment of the present invention, at least one of the first positive electrode mixture layer and the second positive electrode mixture layer further includes a conductive material.

A lithium secondary battery of the present invention includes the above-described positive electrode; a separator; and a negative electrode.

In the lithium secondary battery according to an embodiment of the present invention, adhesive force a between a positive electrode current collector and a first positive electrode mixture layer, adhesive force b between the first positive electrode mixture layer and a second positive electrode mixture layer, and adhesive force c between the second positive electrode mixture layer and the separator satisfy a condition that a > b > c.

In the lithium secondary battery according to an embodiment of the present invention, the adhesive force c between the second positive electrode mixture layer and the separator is in the range of 5N/m to 30N/m.

### [Advantageous Effects]

In a positive electrode for a lithium secondary battery, and a lithium secondary battery including the same according to the present invention, as the first positive electrode active material contained in the first positive electrode mixture layer is made of small particles, the elongation rate of the positive electrode decreases, and accordingly, it is advantageous in the disconnection of the electrode in the situation that is penetrated by a needle type conductor, and the penetration safety is improved as the first positive electrode mixture layer decreases the exposed area of the current collector.

Further, according to a positive electrode for a secondary battery, and a secondary battery including the same, when overcharged, the resistance of the first positive electrode mixture layer increases, and the electric current flowing in the electrode decreases, and accordingly, the charging is terminated, and overcharge safety is improved.

### [Brief Description of the Drawings]

FIG. 1 is a cross-sectional view of a positive electrode according to an embodiment of the present invention.
FIG. 2 is a conceptual diagram for explaining the penetration resistance of a positive electrode according to an embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

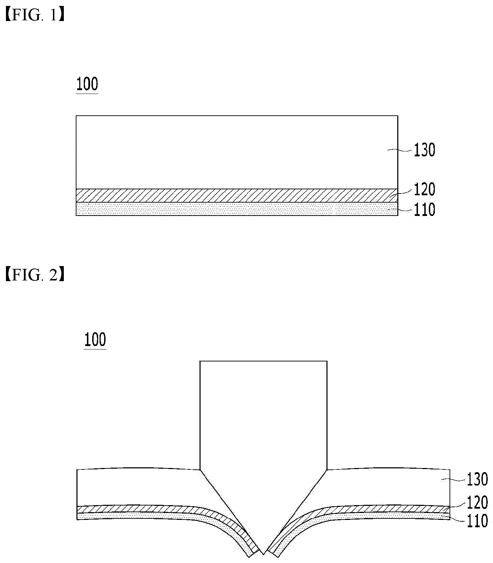

FIG. 1 is a cross-sectional view of a positive electrode according to an embodiment of the present invention. Referring to FIG. 1, a positive electrode 100 for a lithium secondary battery of the present invention includes: a first positive electrode mixture layer 120 contacting a positive electrode current collector 110; and at least one second positive electrode mixture layer 130 arranged on the first positive electrode mixture layer 120. Herein, the first positive electrode mixture layer includes a first positive electrode active material and a first binder, and the second positive electrode mixture layer includes a second positive electrode active material and a second binder. Further, an average particle diameter (D₅₀) the first positive electrode active material is smaller than an average particle diameter (D₅₀) of the second positive electrode active material and is equal to or less than 3 µm, and a specific surface area(BET) of the first positive electrode active material is equal to or greater than 3 m²/g.

FIG. 2 is a conceptual diagram for explaining the penetration resistance of a positive electrode according to an embodiment of the present invention. Referring to FIG. 2, in the positive electrode of the present invention, as the first positive electrode active material constituting the first positive electrode mixture layer contacting the positive electrode current collector is made of small particles, the elongation rate of the positive electrode decreases, and as a result, the positive electrode current collector adjacent thereto becomes more advantageous in the disconnection of the positive electrode due to the decreased elongation rate of the positive electrode.

Hence, when a metal body such as a nail penetrates a positive electrode, the positive electrode current collector is not elongated along the metal body and is disconnected. As such, the contact area between the positive electrode current collector and the metal body may decrease. Further, as the positive electrode current collector is elongated along the metal body, it may contact the negative electrode current collector having an opposite polarity. Herein, the positive electrode of the present invention may suppress a contact between the negative electrode current collector and the positive electrode current collector having an elongation rate which is on the decrease.

Further, FIG. 1 shows an embodiment in which a second positive electrode mixture layer is formed of one layer, but the embodiment of the present invention is not limited to thereto, and the second positive electrode mixture layer may also be formed of 2 or more layers to improve energy density or conductivity.

The average particle diameter (D₅₀) of the first positive electrode active material may correspond to 5 to 80% of the average particle diameter (D₅₀) of the second positive electrode active material.

Namely, according to an embodiment of the present invention, the first positive electrode active material may be coated on the lower portion of the positive electrode to be adjacent to the positive electrode current collector, and the second positive electrode active material having a relatively large particle size (D₅₀) may be coated on the upper portion of the positive electrode. Through this, the elongation rate of the positive electrode decreases.

In the present invention, the average particle diameter D₅₀ may be defined as a particle diameter corresponding to 50% of the volume accumulation amount in the particle diameter distribution curve. The average particle diameter D₅₀ may be measured using, for example, a laser diffraction method. For example, according the method of measuring the average particle size (D₅₀) of the positive electrode active material, after dispersing particles of the positive electrode active material in a dispersion medium, the ultrasonic waves of about 28 kHz are irradiated with the output of 60 W by introducing a commercially available laser diffraction particle size measuring apparatus (e.g., Microtrac MT 3000), and then the average particle size (D₅₀) corresponding to 50% of the volume accumulation amount in the measuring apparatus may be calculated.

Specifically, the average particle diameter of the first positive electrode active material may be equal to or less than 3µm. More preferably, the average particle diameter (D₅₀) of the first positive electrode active material may be in the range of 0.1µm to 2µm, and preferably in the range of 0.1µmto 1.5µm. When the average particle diameter (D₅₀) of the first positive electrode active material is less than 0.1µm, electrode side reaction may occur or dispersibility may decrease during the electrode manufacturing process, and when the average particle diameter (D₅₀) of the first positive electrode active material exceeds 3µm, the adhesive force with the positive electrode current collector may decrease, and the safety improvement effects may decrease.

Further, the specific surface area of the first positive electrode active material is equal to or greater than 3 m²/g, preferably in the range of 5 m²/g to 25 m²/g, and more preferably in the range of 7 m²/g to 20 m²/g. If the specific surface area is less than 3 m²/g, the elongation rate of the positive electrode may increase, which is not preferable.

In the present invention, the specific surface area is measured by BET method and may specifically be calculated from the nitrogen gas adsorption amount at a liquid nitrogen temperature (77K) using BELSORP-mino II of BEL Japan company.

The second positive electrode active material may be particles having an average particle diameter (D₅₀) relatively greater than that of the first positive electrode active material.

Specifically, the average particle diameter (D₅₀) of the second positive electrode active material may be equal to or greater than 3 µm, preferably in the range of 3 to 50 µm, and more preferably in the range of 3 to 30 µm.When the average particle diameter (D₅₀) of the second positive electrode active material is less than 3 µm, there may be a difficulty in the rolling process at the time of manufacturing an electrode.

Further, the specific surface area of the second positive electrode active material is equal to or greater than 2 m²/g, preferably in the range of 0.1 to 1.5 m²/g, and more preferably in the range of 0.2 to 1.2 m²/g.

The elongation rate of the positive electrode according to the present invention is in the range of 0.5 to 2%, preferably in the range of 0.5 to 1.8%, and more preferably in the range of 0.6 to 1.5%.In the present invention, the elongation rate of the positive electrode is a value measured using UTM equipment, and when elongated at the rate of about 5 mm/min. after mounting the positive electrode, the elongation rate was measured through the length change until the positive electrode is elongated as much as possible, compared to the length of the existing positive electrode. When the elongation rate of the positive electrode in the above range, it is possible to improve the cell performance such as lifespan characteristics while increasing the penetration resistance.

In the positive electrode for a lithium secondary battery according to an embodiment of the present invention, adhesive force a between a positive electrode current collector and a first positive electrode mixture layer, adhesive force b between the first positive electrode mixture layer and a second positive electrode mixture layer, and adhesive force c between the second positive electrode mixture layer and the separator satisfy a condition that a > b > c.

This is to minimize the contact area between a current collector and a metal body such as a nail when the metal body penetrates the positive electrode. Namely, when a metal body penetrates a positive electrode, external force is applied to the positive electrode, and it may generate a gap between the positive electrode current collector and the first positive electrode mixture layer, between the first positive electrode mixture layer and the second positive electrode mixture layer, and the second positive electrode mixture layer and the separator. Herein, in the case that adhesive force a is relatively greater than adhesive force b and adhesive force c, even if the first positive electrode mixture layer is detached from the second positive electrode mixture layer, the first positive electrode mixture layer is stilled attached on the positive electrode current collector. As such, it is difficult for the metal body to directly contact the positive electrode current collector. Further, in the case that adhesive force b is relatively greater than adhesive force c, even if the second positive electrode mixture layer is detached from the separator, the second positive electrode mixture layer can be attached on the first positive electrode mixture layer and protect the first positive electrode mixture layer. As such, it is possible to suppress a trend that the first positive electrode mixture layer is detached from the positive electrode current collector by external force of the metal body.

Likewise, in the positive electrode of the present invention, adhesive force between the first positive electrode mixture layer and the positive electrode current collector is excellent. As such, when a metal body such as a nail penetrates the positive electrode, the first positive electrode mixture layer decreases the exposed area of the positive electrode current collector. Hence, in the positive electrode of the present invention, safety is improved as the short circuit current decreases.

At this time, it is preferable that a corresponds to 5 to 12 times of b, and preferably 6 to 10 times of b. When the a and the b are in the above numerical range, excellent penetration safety effects can be shown.

The adhesive force a between the current collector and the first positive electrode mixture layer may be in the range of 100N/m to 500N/m, preferably in the range of 150N/m to 300N/m, and more preferably in the range of 200N/m to 300N/m.

The adhesive force b between the first positive electrode mixture layer and the second positive electrode mixture layer may be in the range of 10N/m to 40N/m, preferably in the range of 15N/m to 35N/m, and more preferably in the range of 20N/m to 35N/m.

The adhesive force c between the second positive electrode mixture layer and the separator may be smaller than the adhesive force b and be in the range of 5N/m to 30N/m, preferably in the range of 7N/m to 25N/m, and more preferably in the range of 10N/m to 20N/m.

The first positive electrode mixture layer and the second positive electrode mixture layer of the present invention include binders, and the binders improve attachment between positive electrode active material particles and adhesive force between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and one kind or a mixture of two or more kinds of them may be used. The binder may be included in a 1 to 30% by weight based on the total weight of the positive electrode mixture layer.

In an embodiment of the present invention, the first binder included in the first positive electrode mixture layer and the second binder included in the second positive electrode mixture layer may be the binder having the same physical properties. For example, if the first binder is a hydrophilic binder, the second binder may also be a hydrophilic binder, and if the first binder is a lipophilic binder, the second binder may also be a lipophilic binder. The same physical property indicates a concept including an embodiment in which the type of the first binder is the same as that of the second binder.

In one specific example, a weight ratio of the first binder based on a total weight of the first positive electrode mixture layer may be greater than a weight ratio of the second binder based on a total weight of the second positive electrode mixture layer. In the present invention, the adhesive force a between the first positive electrode mixture layer and the positive electrode current collector may be controlled to be greater than the adhesive force b and the adhesive force c by controlling the porosity of the first positive electrode mixture layer and the particle diameter and the specific surface area of the first positive electrode active material included in the first positive electrode mixture layer to satisfy predetermined conditions, but the adhesive force a may be allowed to further increase by making the content of the first binder of the first positive electrode mixture layer become greater than the content of the second binder of the second positive electrode mixture layer. Herein, the content of the binder means the weight ratio by which the first binder occupies in the total weight of the first positive electrode mixture layer, and the weight ratio by which the second binder occupies in the total weight of the second positive electrode mixture layer.

At this time, the weight ratio of the first binder based on the total weight of the first positive electrode mixture layer may be in the range of 0.01 to 0.3 and preferably in the range of 0.05 to 0.2. The thickness of the first positive electrode mixture layer may be in the range of 1µm to 20µm and preferably in the range of 1µm to 10µm.

The first positive electrode active material and/or the second positive electrode active material of the present invention may include a lithium transition metal oxide represented by a following chemical formula 1:

[Chemical formula 1] LiₐNi_{1-x-y}CoₓMn_{y}MzO₂

Herein, M is at least one selected from the group consisting of Al, Zr, Ti, Mg, Ta, Nb, Mo and Cr, and wherein 0.9≤a≤1.5, 0≤x≤1, 0≤y≤0.5, 0≤z≤0.1, and 0≤x+y≤1.

However, the first positive electrode active material and/or the second positive electrode active material are not necessarily limited by a lithium transition metal oxide represented by chemical formula 1, and the first positive electrode active material and/or the second positive electrode active material may be a layered compound such as lithium cobalt oxide (LiCoO₂), lithium nickel oxide (LiNiO₂), or a compound substituted with one or more transition metals; lithium manganese oxides such as Li₁₊ₓMn₂₋ₓO₄ (herein, x is between 0 and 33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; lithium nickel oxide expressed by LiNi₁₋ₓ₂M¹ₓ₂O₂ (herein, M¹ = Co, Mn, Al, Cu, Fe, Mg, B or Ga, and x₂ = 0.01 to 0.3); a lithium manganese compound oxide expressed by Li₂Mn₃M³O₈ (where M³ = Fe, Co, Ni, Cu or Zn); LiNiₓ₄Mn₂₋ₓ₄O₄ (herein, x₄ = 0.01 to 1); LiMn₂O₄ in which a part of Li is substituted with an alkaline earth metal ion; disulfide compounds; Fe₂(MoO₄)₃, etc.

Further, the first and second positive electrode active materials may contain lithium transition metal oxides of the same composition or lithium transition metal oxides of different compositions.

The first positive electrode active material contains lithium iron phosphate having an olivine structure, represented by a following chemical formula 2:

[Chemical formula 2] Li₁₊ₐFe₁₋ₓMₓ(PO_{4-b})X_{b}

Herein, M is at least one selected from the group consisting of Al, Mg and Ti, X is at least one selected from the group consisting of F, S and N, -0.5≤a≤+0.5, 0≤x≤0.5, and 0≤b≤0.1.

The volume of the positive electrode active material having an olivine structure decreases as lithium in the first positive electrode active material is discharged at about 4.5V or higher overcharge voltage, and accordingly, the conductive path of the first positive electrode mixture layer is quickly blocked. As such, the first positive electrode mixture layer acts as an insulating layer and the resistance increases, and the charging current is blocked, thereby reaching the overcharge termination voltage. Hence, in the present invention, synergy effects can be shown in terms of safety improvement by selecting the positive electrode active material having an olivine structure as the first positive electrode active material included in the first positive electrode mixture layer.

Likewise, the positive electrode of the present invention increases the electric resistance of the first positive electrode mixture layer by selecting lithium iron phosphate having an olivine structure represented by chemical formula 2 as the first positive electrode active material included in the first positive electrode mixture layer, so that the first positive electrode mixture layer may act as the resistance layer at a high voltage, and accordingly, the resistance of the positive electrode significantly increases at the time of the overcharge, which causes termination of charge due to the decrease of the charging current, thereby securing safety. In this case, the first positive electrode mixture layer functions as a safety layer (SFL) for preventing overcharge, and under the condition that the battery normally operates, the positive electrode active material implements capacity.

Further, in the positive electrode of the present invention, the type of the active material of the first positive electrode mixture layer may be different from that of the second positive electrode mixture layer. For example, the first positive electrode mixture layer may select lithium iron phosphate having an olivine structure represented by the chemical formula 2 as the first positive electrode active material, and the second positive electrode mixture layer may select lithium transition metal oxide represented by the chemical formula 1 as the second positive electrode active material. In this case, it is possible to provide a secondary battery having excellent capacity characteristics due to high capacity/ high energy density characteristics of the second positive electrode active material.

In a preferred example of the present invention, on an assumption that the thickness of the first positive electrode mixture layer is defined as A, and the thickness of the second positive electrode mixture layer is defined as B, A/B may be equal to or less than 0.3 and preferably equal to or less than 0.1. The first positive electrode mixture layer of the present invention is a layer prepared to secure safety and does not need to be thick as long as it can increase the penetration resistance when penetrated by a conductor such as a metal body.

At least one of the first positive electrode mixture layer and the second positive electrode mixture layer of the present invention further includes a conductive material. Such a conductive material is not particularly limited as long as it has electrical conductivity without causing a chemical change in the battery, and examples thereof include graphite such as natural graphite and artificial graphite; carbon-based materials such as carbon black, acetylene black, Ketjen black, channel black, furnace black, lamp black, thermal black, and carbon fiber; metal powder or metal fiber such as copper, nickel, aluminum and silver; conductive whiskey such as zinc oxide and potassium titanate; conductive metal oxides such as titanium oxide; and conductive materials such as polyphenylene derivatives and the like. The conductive material may be included in a 1 to 30% by weight based on the total weight of the positive electrode mixture layer.

In the present invention, the positive electrode current collector is not particularly limited as long as it has conductivity without causing a chemical change in a battery. Examples of the positive electrode current collector include stainless steel, aluminum, nickel, titanium, sintered carbon or aluminum or stainless steel of which the surface has been treated with carbon, nickel, titanium, silver, or the like. Further, the positive electrode current collector may generally have a thickness of 3 to 500µm, and it is possible to increase the adhesive force of the positive electrode active material by forming minute irregularities on the surface of the positive electrode current collector. It may be used as various forms such as a film, a sheet, a foil, a net, a porous body, a foam, and a nonwoven fabric.

The conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and thermal black; conductive fibers such as carbon fiber and metal fiber; conductive tubes such as carbon nanotube; metal powders such as carbon fluoride, aluminum and nickel powder; conductive whiskey such as zinc oxide and potassium titanate; conductive metal oxides such as titanium oxide; and conductive materials such as polyphenylene derivatives and the like.

In addition, the present invention provides an electrochemical device including the positive electrode. The electrochemical device may be specifically a battery or a capacitor, and more specifically, it may be a lithium secondary battery.

Specifically, the lithium secondary battery includes a positive electrode, a negative electrode facing against the positive electrode, a separator interposed between the positive electrode and the negative electrode, and an electrolyte, and the positive electrode has been described above. Further, the lithium secondary battery may selectively further include a battery case for accommodating the electrode assembly of the positive electrode, the negative electrode and the separator, and a sealing member for sealing the battery case.

In the lithium secondary battery, the negative electrode includes a negative electrode current collector and a negative electrode mixture layer positioned on the negative electrode current collector.

The negative electrode current collector is not particularly limited as long as it has high electrical conductivity without causing chemical changes in the battery, and examples thereof include copper, stainless steel, aluminum, nickel, titanium, sintered carbon, copper or stainless steel of which the surface has been treated with carbon, nickel, titanium, silver or the like, aluminum-cadmium alloy, or the like. Further, the negative electrode current collector may generally have a thickness of 3 to 500 µm, and may strengthen the coupling force of the negative electrode active material by forming minute irregularities on the surface of the negative electrode current collector as in the positive electrode current collector. It may be used as various forms such as a film, a sheet, a foil, a net, a porous body, a foam, and a nonwoven fabric.

The negative electrode mixture layer includes a negative electrode active material, a binder, and a conductive material. The negative electrode mixture layer may be manufactured by applying a composition for forming a negative electrode mixture layer containing a negative electrode active material and selectively a binder and a conductive material on a negative electrode current collector and drying them, or by casting the composition for forming the negative electrode mixture layer on a separate support and then laminating a film, obtained by peeling the slurry from the support on the negative electrode current collector.

A compound, in which a reversible intercalation and deintercalation of lithium is possible, may be used as the negative electrode active material. Specific examples thereof include carbonaceous materials such as artificial graphite, natural graphite, graphitized carbon fiber and amorphous carbon; A metal compound capable of alloying with lithium such as Si, Al, Sn, Pb, Zn, Bi, In, Mg, Ga, Cd, Si alloy, Sn alloy or Al alloy; Metal oxides such as SiO_{β} (0 <β< 2), SnO₂, vanadium oxide, and lithium vanadium oxide that can dope and dedope lithium; or a composite containing the above-described metallic compound and a carbonaceous material such as a Si-C composite or a Sn-C composite, and any one or a mixture of two or more of them. In addition, a metal lithium thin film may be used as the negative electrode active material. As the carbon material, both low-crystalline carbon and high-crystalline carbon may be used. Examples of the low-crystalline carbon include soft carbon and hard carbon. Examples of the highly crystalline carbon include amorphous, flaky, scaly, spherical or fibrous natural graphite natural graphite or artificial graphite, Kish graphite, pyrolytic carbon, mesophase pitch based carbon fiber, meso-carbon microbeads, mesophase pitches and petroleum or coal tar pitch derived cokes.

In addition, the binder and the conductive material may be the same as described in the positive electrode previously.

Meanwhile, in the lithium secondary battery, the separator is used to separate the negative electrode from the positive electrode and provide a moving path of lithium ions, and any separator generally used in a lithium secondary battery may be used without any special limitation. In particular, a separator having a high electrolyte solution moisturization capability and a low resistance to ion movement of electrolyte solution is preferred. Specifically, porous polymer films, for example, porous polymer films made of polyolefin-based polymers such as ethylene homopolymers, propylene homopolymers, ethylene/butene copolymers, ethylene/hexane copolymers and ethylene/methacrylate copolymers may be used. Further, a nonwoven fabric made of a conventional porous nonwoven fabric, for example, glass fiber of high melting point, polyethylene terephthalate fiber, or the like may be used. In order to secure heat resistance or mechanical strength, a coated separator containing a ceramic component or a polymer material may be used, and may be optionally used as a single layer or a multilayer structure.

Examples of the electrolyte used in the present invention include an organic liquid electrolyte, an inorganic liquid electrolyte, a solid polymer electrolyte, a gel polymer electrolyte, a solid inorganic electrolyte, and a molten inorganic electrolyte which can be used in the production of a lithium secondary battery, but the present invention is not limited to these examples.

Specifically, the electrolyte may include an organic solvent and a lithium salt.

The organic solvent may be any organic solvent that can act as a medium through which ions involved in an electrochemical reaction of a battery can move. Specifically, examples of the organic solvent include ester solvents such as methyl acetate, ethyl acetate, γ-butyrolactone and γ-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethylcarbonate (DEC), methylethylcarbonate (MEC), ethylmethylcarbonate (EMC), ethylene carbonate (EC), and propylene carbonate (PC); alcohol solvents such as ethyl alcohol and isopropyl alcohol; nitriles such as R-CN (R is a straight, branched or cyclic hydrocarbon group of C2 to C20, which may contain a double bond aromatic ring or ether bond); amides such as dimethylformamide; dioxolanes such as 1,3-dioxolane; or sulfolane. Among them, a carbonate-based solvent is preferable, and a mixture of a cyclic carbonate (for example, ethylene carbonate or propylene carbonate) having a high ionic conductivity and a high dielectric constant which can increase the charge/discharge performance of a battery, and a linear carbonate compound having a low viscosity (for example, ethyl methyl carbonate, dimethyl carbonate or diethyl carbonate) is more preferable. In this case, when the cyclic carbonate and the chain carbonate are mixed in a volume ratio of about 1: 1 to about 1: 9, the performance of the electrolytic solution may be excellent.

The lithium salt can be used without any particular limitation as long as it is a compound capable of providing lithium ions used in a lithium secondary battery. Specifically, the lithium salt may be LiPF6, LiClO4, LiAsF6, LiBF4, LiSbF6, LiAlO4, LiAlCl4, LiCF3SO3, LiC4F9SO3, LiN(C2F5SO3)2, LiN(C2F5SO2)2, LiN(CF3SO2)2. LiCl, LiI, or LiB(C₂O₄)2 may be used. The concentration of the lithium salt is preferably within the range of 0.1M to 2.0M.When the concentration of the lithium salt is within the above range, the electrolyte has an appropriate conductivity and viscosity, so that it can exhibit excellent electrolyte performance and the lithium ions can effectively move.

In addition to the electrolyte components, in order to improve the life characteristics of the battery, inhibit the battery capacity reduction, and improve the discharge capacity of the battery, the electrolyte may contain one or more of a haloalkylene carbonate-based compound such as difluoroethylene carbonate, pyridine, triethyl phosphate, triethanolamine, cyclic ether, ethylene diamine, n-glyme, and hexa phosphate triamide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol or, aluminum trichloride. Herein, The additive may be included in an amount of 0.1 wt% to 5 wt% based on the total weight of the electrolyte.

Lithium secondary batteries including a positive electrode active material according to the present invention are useful for electric vehicles such as portable devices such as mobile phones, laptop computers, and digital cameras and electric cars such as hybrid electric vehicles because the lithium secondary batteries stably show excellent discharge capacity, output characteristics, and capacity retention rate.

According to another embodiment of the present invention, there is provided a battery module including the lithium secondary battery as a unit cell and a battery pack including the same.

The battery module or the battery pack may be used as a middle or large size device power source of one or more of a power tool; an electric vehicle including an electric vehicle (EV), a hybrid electric vehicle, and a plug-in hybrid electric vehicle (PHEV); or a system for power storage.

Hereinafter, embodiments of the present invention will be described in detail so that those skilled in the art can easily carry out the present invention. The present invention may, however, be embodied in many different forms and should not be construed as limited to the embodiments set forth herein and it is defined in the appended set of claims.

### Example 1

93 wt% of LiFePO₄ positive electrode active material having an average particle diameter (D₅₀) of 1µm and a BET specific surface area of 15m²/g, 2 wt% of carbon black as a conductive material, and 5 wt% of PVdF as a binder were mixed in N-methyl pyrrolidone (NMP) as a solvent, to thereby prepare a first positive electrode slurry.

96 wt% of LiNi_{0.8}Co_{0.1}Mn_{0.1}O₂ positive electrode active material having an average particle diameter (D₅₀) of 4µm and a BET specific surface area of 0.7 m²/g, 2 wt% of carbon black as a conductive material, and 2 wt% of PVdF as a binder were mixed in N-methyl pyrrolidone (NMP) as a solvent, to thereby prepare a second positive electrode slurry.

The first positive electrode active material slurry and the second positive electrode active material slurry were coated on an aluminum foil, which was then dried and rolled to thereby manufacture a positive electrode having a structure of an aluminum foil/ a first positive electrode mixture layer/ a second positive electrode mixture layer. The thickness of the first positive electrode mixture layer was 10µm, and the thickness of the second positive electrode mixture layer was 80µm.

### Examples 2 to 3

The positive electrode was manufactured in the same method as that of the example 1 except that the composition of the first positive electrode active material slurry was changed as shown in Table 1 below.

### Comparative Example 1

96 wt% of LiNi_{0.8}Co_{0.1}Mn_{0.1}O₂ positive electrode active material having an average particle diameter (D₅₀) of 4µm and a BET specific surface area of 0.7 m²/g, 2 wt% of carbon black as a conductive material, and 2 wt% of PVdF as a binder were mixed in N-methyl pyrrolidone (NMP) as a solvent, to thereby prepare a first positive electrode slurry.

93 wt% of LiFePO₄ positive electrode active material having an average particle diameter (D₅₀) of 1µm and a BET specific surface area of 15m'/g, 2 wt% of carbon black as a conductive material, and 5 wt% of PVdF as a binder were mixed in N-methyl pyrrolidone (NMP) as a solvent, to thereby prepare a second positive electrode slurry.

The first positive electrode active material slurry and the second positive electrode active material slurry were coated on an aluminum foil, which was then dried and rolled to thereby manufacture a positive electrode having a structure of an aluminum foil/ a first positive electrode mixture layer/ a second positive electrode mixture layer. The thickness of the first positive electrode mixture layer was 10µm, and the thickness of the second positive electrode mixture layer was 80µm.

### Comparative Example 2

A positive electrode was manufactured in the same manner as in the example 1 except that LiFePO₄ having an average particle diameter (D₅₀) of 4µm and a specific surface area of 2.8 m²/g was used as LiFePO₄ included in the first positive electrode active material slurry, and the composition of the first positive electrode active material slurry was changed as shown in Table 1 below.

**[Table 1]**

| | Lower portion (first positive electrode mixture layer) | | Upper portion (second positive electrode mixture layer) | |
|---|---|---|---|---|
| | Type of active material | Composition (first active material/ conductive material/binder) | Type of active material | Composition (Second active material/ conductive material/ binder) |
| Example 1 | LiFePO₄ | 93/2/5 | LiNi_{0.8}Co_{0.1}Mn_{0.1}O₂ | 96/2/2 |
| Example 2 | | 88/2/10 | | 96/2/2 |
| Example 3 | | 83/2/15 | | 96/2/2 |
| Comparative Example 1 | LiNi_{0.8}Co_{0.1}Mn_{0.1}O₂ | 96/2/2 | LiFePO₄ | 93/2/5 |
| Comparative Example 2 | LiFePO₄ | 93/2/5 | LiNi_{0.8}Co_{0.1}Mn_{0.1}O₂ | 96/2/2 |

### Experimental Example 1: Elongation rate measurement

The positive electrode, which was manufactured in examples 1 to 3 and comparative examples 1 and 2, were manufactured as a specimen, and the specimen was mounted on UTM equipment and was then elongated at about 5 mm/min. At this time, the elongation rate was measured until the positive electrode is elongated to the maximum length, compared to the length of the existing positive electrode. And the result is shown in Table 2.

### Experimental Example 2: Adhesive force measurement

Each of positive electrodes, which were manufactured in the examples 1 to 3 and in comparative examples 1 and 2, were cut to have a width of 25 mm and a length of 70 mm. Thereafter, a separator was stacked, which was then laminated at the condition of 70°C and 4 MPa to thereby manufacture a specimen.

The prepared specimen was attached and fixed on a glass plate by using a double-sided tape, and at this time, a positive electrode was arranged to face the glass plate. The separator portion of the specimen was peeled off at 25°C using a tensile tester, and the peel strength at this time was measured in real time. Herein, the average value was defined as the interface adhesive force c between the second positive electrode mixture layer and the separator, and the result was shown in Table 2.

The interface adhesive force b between the first positive electrode mixture layer and the second positive electrode mixture layer, and the interface adhesive force a between the first positive electrode mixture layer and the positive electrode current collector were also measured in the above scheme, and the result was shown in Table 2.

### Experimental example 3: Penetration safety evaluation

A lithium secondary battery was manufactured using each of a positive electrode manufactured in the examples 1 to 3 and a positive electrode manufactured in comparative examples 1 and 2.

First, natural graphite, carbon black conductive material, and PVDF binder were mixed in N-methyl pyrrolidone solvent at the weight ratio of 85: 10: 5, to thereby manufacture a slurry for forming a negative electrode, which was then coated on a copper foil to thereby manufacture a negative electrode.

An electrode assembly was manufactured by interposing a separator of a porous polyethylene between the negative electrode and each positive electrode manufactured according to examples 1 to 3 and comparative examples 1 to 2, and each of the electrode assemblies was positioned in a case, and an electrolyte solution was injected into the case, to thereby manufacture a lithium secondary battery. At this time, lithium hexafluorophosphate (LiPF₆) of 1.0M concentration was dissolved in an organic solvent consisting of ethylene carbonate/dimethyl carbonate/ethyl methylcarbonate (EC / DMC / EMC volume ratio = 3/ 4/ 3) to manufacture an electrolyte solution.

A lithium secondary battery was manufactured using each of positive electrodes manufactured according to examples 1 to 3 and comparative examples 1 and 2, and when a metal body having a diameter of 3 mm was made to descend at 80 mm/sec. to penetrate the cell of the lithium secondary battery in the same condition as in PV8450 condition, it was evaluated whether ignited, and the result was shown in Table 2 below.

**[Table 2]**

| | Elongation rate (%) of positive electrode | Adhesive force (N/m) | | | Whether ignited (Pass/Test) |
|---|---|---|---|---|---|
| | | a | b | c | |
| Example 1 | 0.8 | 209 | 26 | 16 | 6P/6T |
| Example 2 | 0.9 | 268 | 32 | 18 | 6P/6T |
| Example 3 | 1.2 | 298 | 35 | 19 | 6P/6T |
| Comparative Example 1 | 2.3 | 76 | 22 | 16 | 0P/6T |
| Comparative Example 2 | 2.1 | 124 | 23 | 15 | 2P/6T |

Referring to Table 2, the secondary battery including a positive electrode according to the example of the present invention shows improved penetration safety, compared to the secondary battery including the positive electrode according to the comparative example. The positive electrode of comparative examples 1 and 2 satisfies a>b>c, but the elongation rate of the positive electrode exceeds 2.0%.Hence, in the present invention, in order to improve penetration safety, it is preferable that the elongation rate of the positive electrode is 2.0% or less.

### Experimental example 4: Overcharge safety evaluation

A lithium secondary battery was manufactured with the same negative electrode, separator material and method as in the experimental example 3 using each positive electrode according to example 2 and the comparative example 1.The cell of SOC 100% was prepared by charging each manufactured lithium secondary battery at the condition of 0.33C and 4.2V CCCV. Further, cells of SOC 110% and SOC 120% were manufactured by charging cells of SOC 100% at 1C-rate with 10% and 20% of the cell capacity. The resistance at SOC 100%, 110% and 120% of each cell was measured using electrochemical impedance spectroscopy.

Further, the resistance of the overcharged battery is shown in Table 3 below.

**[Table 3]**

| | SOC 100 | SOC 110 | SOC 120 |
|---|---|---|---|
| Example 2 | 0.31 | 0.93 | 5.34 |
| Comparative Example 1 | 0.31 | 0.73 | 1.14 |

As shown in the result of Table 3, the positive electrode according to the example of the present invention showed a resistance similar to that in the positive electrode according to the comparative example in the operable charge state (SOC 100%, 110%), but the resistance significantly increased, compared to the comparative example, at the time of the overcharge (SOC 120%).Hence, it is expected that the positive electrode of the present invention can secure safety by causing the termination of charge by increasing the resistance at the time of overcharge.

The above description is illustrative of the present invention, being the scope of the invention defined by the appended claims.

Therefore, the drawings disclosed in the present invention are not intended to limit the present invention but to describe the present invention, being the scope defined by the appended claims.

## Claims

1. A positive electrode for a lithium secondary battery, the positive electrode comprising:
a first positive electrode mixture layer contacting a positive electrode current collector; and
at least one second positive electrode mixture layer arranged on the first positive electrode mixture layer,
wherein the first positive electrode mixture layer includes a first positive electrode active material and a first binder,
wherein the second positive electrode mixture layer includes a second positive electrode active material and a second binder, and
wherein an average particle diameter (Dv₅₀) the first positive electrode active material is smaller than an average particle diameter (Dv₅₀) of the second positive electrode active material and is equal to or less than 3µm, being the average particle diameter (Dv₅₀) measured by laser diffraction method, and a specific surface area (BET) of the first positive electrode active material is equal to or greater than 3m²/g, being the specific surface area (BET) measured by BET (Brunauer-Emmett-Teller) method with nitrogen;
wherein the first positive electrode active material contains lithium iron phosphate having an olivine structure, represented by a following chemical formula 2:
[Chemical formula 2] Li₁₊ₐFe₁₋ₓMₓ(PO_{4-b})X_{b},
wherein M is at least one selected from the group consisting of Al, Mg and Ti, X is at least one selected from the group consisting of F, S and N, -0.5≤a≤+0.5, 0≤x≤0.5, and 0≤b≤0.1; wherein
an elongation rate of the positive electrode for the lithium secondary battery is in a range of 0.5% to 2.0%, being the elongation rate measured until the positive electrode is elongated to the maximum length, compared to the length of the existing positive electrode.

2. The positive electrode of claim 1, wherein the average particle diameter (Dv₅₀) the first positive electrode active material is in a range of 0.1 µm to 2 µm, being the average particle diameter (Dv₅₀) measured by laser diffraction method, and the specific surface area(BET) of the first positive electrode active material is in a range of 5 m²/gto 25 m²/g, preferably 7 m²/g to 25 m²/g, being the specific surface area (BET) measured by BET (Brunauer-Emmett-Teller) method with nitrogen.

3. The positive electrode of claim 1, wherein an adhesive force (a) between the positive electrode current collector and the first positive electrode mixture layer is greater than an adhesive force (b) between the first positive electrode mixture layer and the second positive electrode mixture layer, being the adhesive force measured peel strength at 25°C using a tensile tester.

4. The positive electrode of claim 1, wherein an adhesive force (a) between the positive electrode current collector and the first positive electrode mixture layer is in a range of 100N/m to 500N/m.

5. The positive electrode of claim 1, wherein an adhesive force (b) between the first positive electrode mixture layer and the second positive electrode mixture layer is in a range of 10N/m to 40N/m, being the adhesive force measured peel strength at 25°C using a tensile tester.

6. The positive electrode of claim 1, wherein a weight ratio of the first binder based on a total weight of the first positive electrode mixture layer is greater than a weight ratio of the second binder based on a total weight of the second positive electrode mixture layer.

7. The positive electrode of claim 4, wherein the weight ratio of the first binder of the total weight of the first positive electrode mixture layer is in a range of 0.01 to 0.3.

8. The positive electrode of claim 1, wherein A/B ≤ 0.3, wherein A denotes a thickness of the first positive electrode mixture layer, and B denotes a thickness of the second positive electrode mixture layer.

9. The positive electrode of claim 1, wherein a thickness of the first positive electrode mixture layer is in a range of 1µm to 20µm.

10. The positive electrode of claim 1, wherein at least one of the first positive electrode active material and the second positive electrode active material includes a lithium transition metal oxide represented by a following chemical formula 1:
[Chemical formula 1] LiₐNi_{1-x-y}CoₓMn_{y}MzO₂,
wherein M is at least one selected from the group consisting of Al, Zr, Ti, Mg, Ta, Nb, Mo and Cr, and wherein 0.9≤a≤1.5, 0≤x≤1, 0≤y≤0.5, 0≤z≤0.1, and 0≤x+y≤1.

11. The positive electrode of claim 1, wherein at least one of the first positive electrode mixture layer and the second positive electrode mixture layer further includes a conductive material.

12. A lithium secondary battery including the positive electrode for a lithium secondary battery of claim 1; a separator; and a negative electrode.

13. The lithium secondary battery of claim 12, wherein adhesive force (a) between a positive electrode current collector and a first positive electrode mixture layer, adhesive force (b) between the first positive electrode mixture layer and a second positive electrode mixture layer, and adhesive force (c) between the second positive electrode mixture layer and the separator satisfy a condition that (a) > (b) > (c), being the adhesive force measured peel strength at 25°C using a tensile tester.

14. The lithium secondary battery of claim 13, wherein the adhesive force (c) between the second positive electrode mixture layer and the separator is in a range of 5N/m to 30N/m, being the adhesive force measured peel strength at 25°C using a tensile tester.

## Patentansprüche

1. Positive Elektrode für eine Lithium-Sekundärbatterie, die positive Elektrode umfassend:
eine erste positive Elektrodenmischung-Schicht, welche einen positiven Elektroden-Stromsammler kontaktiert; und
wenigstens eine zweite positive Elektrodenmischung-Schicht, welche an der ersten positiven Elektrodenmischung-Schicht angeordnet ist,
wobei die erste positive Elektrodenmischung-Schicht ein erstes positives aktives Elektrodenmaterial und ein erstes Bindemittel umfasst,
wobei die zweite positive Elektrodenmischung-Schicht ein zweites positives aktives Elektrodenmaterial und ein zweites Bindemittel umfasst, und
wobei ein durchschnittlicher Partikeldurchmesser (Dv₅₀) des ersten positiven aktiven Elektrodenmaterials kleiner als ein durchschnittlicher Partikeldurchmesser (Dv₅₀) des zweiten positiven aktiven Elektrodenmaterials und gleich oder kleiner als 3 µm ist, wobei der durchschnittliche Partikeldurchmesser (Dv₅₀) durch ein Laser-Diffraktionsverfahren gemessen wird, und eine spezifische Oberfläche (BET) des ersten positiven aktiven Elektrodenmaterials gleich oder größer als 3 m²/g ist, wobei die spezifische Oberfläche (BET) durch ein BET (Brunauer-Emmett-Teller)-Verfahren mit Stickstoff gemessen wird;
wobei das erste positive aktive Elektrodenmaterial Lithium-Eisen-Phosphat mit einer Olivin-Struktur enthält, welches durch eine folgende chemische Formel 2 repräsentiert ist:
[Chemische Formel 2] Li₁₊ₐFe₁₋ₓMₓ(PO_{4-b})X_{b},
wobei M wenigstens eines ist, ausgewählt aus der Gruppe, bestehend aus Al, Mg und Ti, X wenigstens eines ist, ausgewählt aus der Gruppe,
bestehend aus F, S und N, -0,5≤a≤+0,5, 0≤x≤0,5 und 0≤b≤0,1; wobei eine Verlängerungsrate der positiven Elektrode für die Lithium-Sekundärbatterie in einem Bereich von 0,5% bis 2,0% liegt, wobei die Verlängerungsrate gemessen wird, bis die positive Elektrode zu der maximalen Länge verlängert ist, verglichen mit der Länge der existierenden positiven Elektrode.

2. Positive Elektrode nach Anspruch 1, wobei der durchschnittliche Partikeldurchmesser (Dv₅₀) des ersten positiven aktiven Elektrodenmaterials in einem Bereich von 0,1 µm bis 2 µm liegt, wobei der durchschnittliche Partikeldurchmesser (Dv₅₀) durch ein Laser-Diffraktionsverfahren gemessen wird, und die spezifische Oberfläche (BET) des ersten positiven aktiven Elektrodenmaterials in einem Bereich von 5 m²/g bis 25 m²/g liegt, vorzugsweise 7 m²/g bis 25 m²/g, wobei die spezifische Oberfläche (BET) durch ein BET (Brunauer-Emmett-Teller)-Verfahren mit Stickstoff gemessen wird.

3. Positive Elektrode nach Anspruch 1, wobei eine Haftkraft (a) zwischen dem positiven Elektroden-Stromsammler und der ersten positiven Elektrodenmischung-Schicht größer als eine Haftkraft (b) zwischen der ersten positiven Elektrodenmischung-Schicht und der zweiten positiven Elektrodenmischung-Schicht ist, wobei die Haftkraft eine gemessene Schälfestigkeit bei 25°C unter Verwendung eines Dehnung-Testelements ist.

4. Positive Elektrode nach Anspruch 1, wobei eine Haftkraft (a) zwischen dem positiven Elektroden-Stromsammler und der ersten positiven Elektrodenmischung-Schicht in einem Bereich von 100 N/m bis 500 N/m liegt.

5. Positive Elektrode nach Anspruch 1, wobei eine Haftkraft (b) zwischen der ersten positiven Elektrodenmischung-Schicht und der zweiten positiven Elektrodenmischung-Schicht in einem Bereich von 10 N/m bis 40 N/m liegt, wobei die Haftkraft eine gemessene Schälfestigkeit bei 25°C unter Verwendung eines Dehnung-Testelements ist.

6. Positive Elektrode nach Anspruch 1, wobei ein Gewichtsverhältnis des ersten Bindemittels auf Grundlage eines Gesamtgewichts der ersten positiven Elektrodenmischung-Schicht größer als ein Gewichtsverhältnis des zweiten Bindemittels auf Grundlage eines Gesamtgewichts der zweiten positiven Elektrodenmischung-Schicht ist.

7. Positive Elektrode nach Anspruch 4, wobei das Gewichtsverhältnis des ersten Bindemittels des Gesamtgewichts der ersten positiven Elektrodenmischung-Schicht in einem Bereich von 0,01 bis 0,3 liegt.

8. Positive Elektrode nach Anspruch 1, wobei A/B ≤ 0,3, wobei A eine Dicke der ersten positiven Elektrodenmischung-Schicht bezeichnet und B eine Dicke der zweiten positiven Elektrodenmischung-Schicht bezeichnet.

9. Positive Elektrode nach Anspruch 1, wobei eine Dicke der ersten positiven Elektrodenmischung-Schicht in einem Bereich von 1 µm bis 20 µm liegt.

10. Positive Elektrode nach Anspruch 1, wobei wenigstens eines aus dem ersten positiven aktiven Elektrodenmaterial und dem zweiten positiven aktiven Elektrodenmaterial ein Lithium-Übergangsmetall-Oxid umfasst, welches durch eine folgende chemische Formel 1 repräsentiert ist:
[Chemische Formel 1] LiₐNi_{1-x-y}COₓMn_{y}MzO₂,
wobei M wenigstens eines ist, ausgewählt aus der Gruppe, bestehend aus AL, Zr, Ti, Mg, Ta, Nb, Mo und Cr, und wobei 0,9≤a≤1,5, 0≤x≤1, 0≤y≤0,5, 0≤z≤0,1 und 0≤x+y≤1.

11. Positive Elektrode nach Anspruch 1, wobei wenigstens eine aus der ersten positiven Elektrodenmischung-Schicht und der zweiten positiven Elektrodenmischung-Schicht ferner ein leitfähiges Material umfasst.

12. Lithium-Sekundärbatterie, umfassend die positive Elektrode für eine Lithium-Sekundärbatterie nach Anspruch 1; einen Separator; und eine negative Elektrode.

13. Lithium-Sekundärbatterie nach Anspruch 12, wobei eine Haftkraft (a) zwischen einem positiven Elektroden-Stromsammler und einer ersten positiven Elektrodenmischung-Schicht, eine Haftkraft (b) zwischen der ersten positiven Elektrodenmischung-Schicht und einer zweiten positiven Elektrodenmischung-Schicht und eine Haftkraft (c) zwischen der zweiten positiven Elektrodenmischung-Schicht und dem Separator eine Bedingung erfüllen, dass (a) > (b) > (c), wobei die Haftkraft eine gemessene Schälfestigkeit bei 25°C unter Verwendung eines Dehnung-Testelements ist.

14. Lithium-Sekundärbatterie nach Anspruch 13, wobei die Haftkraft (c) zwischen der zweiten positiven Elektrodenmischung-Schicht und dem Separator in einem Bereich von 5 N/m bis 30 N/m liegt, wobei die Haftkraft eine gemessene Schälfestigkeit bei 25°C unter Verwendung eines Dehnung-Testelements ist.

## Revendications

1. Électrode positive pour une batterie secondaire au lithium, l'électrode positive comprenant :
une première couche de mélange d'électrode positive en contact avec un collecteur de courant d'électrode positive ; et
au moins une deuxième couche de mélange d'électrode positive agencée sur la première couche de mélange d'électrode positive,
dans laquelle la première couche de mélange d'électrode positive comporte un premier matériau actif d'électrode positive et un premier liant,
dans laquelle la deuxième couche de mélange d'électrode positive comporte un deuxième matériau actif d'électrode positive et un deuxième liant, et
dans laquelle un diamètre particulaire moyen (Dv₅₀) du premier matériau actif d'électrode positive est inférieur à un diamètre particulaire moyen (Dv₅₀) du deuxième matériau actif d'électrode positive et est inférieur ou égal à 3 *µm,* le diamètre particulaire moyen (Dv₅₀) étant mesuré par un procédé de diffraction laser, et une surface spécifique (BET) du premier matériau actif d'électrode positive est supérieure ou égale à 3 m²/g, la surface spécifique (BET) étant mesurée par le procédé BET (Brunauer-Emmett-Teller) avec de l'azote ;
dans laquelle le premier matériau actif d'électrode positive contient un phosphate de fer et de lithium ayant une structure d'olivine, représenté par une formule chimique 2 suivante :
[Formule chimique 2] Li₁₊ₐFe₁₋ₓMₓ(PO_{4-b})X_{b},
dans laquelle M est au moins l'un sélectionné dans le groupe consistant en Al, Mg et Ti, X est au moins l'un sélectionné dans le groupe consistant en F, S et N, - 0,5 ≤ a ≤ +0,5, 0 ≤ x ≤ 0,5 et 0 ≤ b ≤ 0,1 ; dans laquelle
un taux d'allongement de l'électrode positive pour la batterie secondaire au lithium est dans une plage de 0,5 % à 2,0 %, le taux d'allongement étant mesuré jusqu'à ce que l'électrode positive soit allongée à la longueur maximale, par rapport à la longueur de l'électrode positive existante.

2. Électrode positive selon la revendication 1, dans laquelle le diamètre particulaire moyen (Dv₅₀) du premier matériau actif d'électrode positive est dans une plage de 0,1 µm à 2 µm, le diamètre particulaire moyen (Dv₅₀) étant mesuré par un procédé de diffraction laser, et la surface spécifique (BET) du premier matériau actif d'électrode positive est dans une plage de 5 m²/g à 25 m²/g, de préférence de 7 m²/g à 25 m²/g, la surface spécifique (BET) étant mesurée par le procédé BET (Brunauer-Emmett-Teller) avec de l'azote.

3. Électrode positive selon la revendication 1, dans laquelle une force d'adhérence (a) entre le collecteur de courant d'électrode positive et la première couche de mélange d'électrode positive est supérieure à une force d'adhérence (b) entre la première couche de mélange d'électrode positive et la deuxième couche de mélange d'électrode positive, la force d'adhérence étant la résistance au pelage mesurée à 25 °C à l'aide d'une machine d'essai de traction.

4. Électrode positive selon la revendication 1, dans laquelle une force d'adhérence (a) entre le collecteur de courant d'électrode positive et la première couche de mélange d'électrode positive est dans une plage de 100 N/m à 100 N/m.

5. Électrode positive selon la revendication 1, dans laquelle une force d'adhérence (b) entre la première couche de mélange d'électrode positive et la deuxième couche de mélange d'électrode positive est dans une plage de 10 N/m à 40 N/m, la force d'adhérence étant la résistance au pelage mesurée à 25 °C à l'aide d'une machine d'essai de traction.

6. Électrode positive selon la revendication 1, dans laquelle un rapport pondéral du premier liant sur la base d'un poids total de la première couche de mélange d'électrode positive est supérieur à un rapport pondéral du deuxième liant sur la base d'un poids total de la deuxième couche de mélange d'électrode positive.

7. Électrode positive selon la revendication 4, dans laquelle le rapport pondéral du premier liant du poids total de la première couche de mélange d'électrode positive est dans une plage de 0,01 à 0,3.

8. Électrode positive selon la revendication 1, dans laquelle A/B ≤ 0,3, dans laquelle A désigne une épaisseur de la première couche de mélange d'électrode positive, et B désigne une épaisseur de la deuxième couche de mélange d'électrode positive.

9. Électrode positive selon la revendication 1, dans laquelle une épaisseur de la première couche de mélange d'électrode positive est dans une plage de 1 *µm à* 20 *µm.*

10. Électrode positive selon la revendication 1, dans laquelle au moins un parmi le premier matériau actif d'électrode positive et le deuxième matériau actif d'électrode positive comporte un oxyde de métal de transition et de lithium représenté par une formule chimique 1 suivante :
[Formule chimique 1] LiₐNi_{1-x-y}CoₓMn_{y}MzO₂,
dans laquelle M est au moins l'un sélectionné dans le groupe consistant en Al, Zr, Ti, Mg, Ta, Nb, Mo et Cr, et dans laquelle 0,9 ≤ a ≤ 1,5, 0 ≤ x ≤ 1, 0 ≤ y ≤ 0,5, 0 ≤ z ≤ 0,1 et 0 ≤ x+y ≤ 1.

11. Électrode positive selon la revendication 1, dans laquelle au moins une parmi la première couche de mélange d'électrode positive et la deuxième couche de mélange d'électrode positive comporte en outre un matériau conducteur.

12. Batterie secondaire au lithium comportant l'électrode positive pour une batterie secondaire au lithium selon la revendication 1 ; un séparateur ; et une électrode négative.

13. Batterie secondaire au lithium selon la revendication 12, dans laquelle la force d'adhérence (a) entre un collecteur de courant d'électrode positive et une première couche de mélange d'électrode positive, la force d'adhérence (b) entre la première couche de mélange d'électrode positive et une deuxième couche de mélange d'électrode positive, et la force d'adhérence (c) entre la deuxième couche de mélange d'électrode positive et le séparateur satisfont à une condition selon laquelle (a) > (b) > (c), la force d'adhérence étant la résistance au pelage mesurée à 25 °C à l'aide d'une machine d'essai de traction.

14. Batterie secondaire au lithium selon la revendication 13, dans laquelle la force d'adhérence (c) entre la deuxième couche de mélange d'électrode positive et le séparateur est dans une plage de 5 N/m à 30 N/m, la force d'adhérence étant la résistance au pelage mesurée à 25 °C à l'aide d'une machine d'essai de traction.
